(19)

Europäisches
Patentamt
European
Patent Office
Office européen
des brevets

(11) **EP 3 825 949 A1**

(12) **EUROPEAN PATENT APPLICATION**

(43) Date of publication:
26.05.2021 Bulletin 2021/21

(51) Int Cl.:
**G06Q 50/06** (2012.01)

(21) Application number: 20020526.8

(22) Date of filing: 12.11.2020

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(30) Priority: **19.11.2019 EP 19020654**

(71) Applicant: **Linde GmbH**
**82049 Pullach (DE)**

(72) Inventors:
• **Ingo, Thomas**
**82041 Oberhaching (DE)**
• **Gaurav, Padgilwar**
**80687 München (DE)**

(74) Representative: **Imhof, Dietmar**
**Linde GmbH**
**Intellectual Property EMEA**
**Dr.-Carl-von-Linde-Straße 6-14**
**82049 Pullach (DE)**

(54) **ONLINE PLANT OPTIMIZER FOR OPERATING, PERFORMANCE RATING, ENERGY ND COST OPTIMIZATION AND DESIGN OF A PROCESS PLANT AND INTEGRATION WITH A SMART PLANT THREE-DIMENSIONAL PIPING MODEL**

(57)  The present invention relates to a method for operating a process engineering plant, wherein at least one component monitoring module (102, 103, 104, 105, 106, 107) monitors a specific component of the process engineering plant, wherein an efficiency of the specific component is evaluated in dependence of current data characterising a current operation of the specific component and in dependence of design data characterising a design operation of the specific component, wherein at least one optimising module (108, 109, 110, 111) determines an optimum energy consumption and optimum process parameters for operating the process engineering plant in dependence of a result of the evaluation performed by the at least one component monitoring module (102, 103, 104, 105, 106, 107), and wherein a virtual simulation (117) of the process engineering plant is performed, wherein a theoretical model of the process engineering plant is operated in dependence of the result of the evaluation performed by the at least one component monitoring module (102, 103, 104, 105, 106, 107) and in dependence of the optimum energy consumption and the optimum process parameters determined by the at least one optimising module (108, 109, 110, 111).

Fig. 1

EP 3 825 949 A1

**Description**

The present invention relates to a method for operating a process engineering plant and a computing unit for performing this method.

Background of the Invention

Process engineering (also called chemical engineering) plants are usually understood to be plants for carrying out substance modifications and substance conversions with the aid of purposeful physical and/or chemical and/or biological and/or nuclear effects. Such modifications and conversions typically comprise crushing, sieving, mixing, heat transferring, cohobating, crystallizing, drying, cooling, filling, and superimposed substance transformations, such as chemical, biological or nuclear reactions.

A process engineering plant can comprise several different components such as different heat exchangers, e.g. plate-fin heat exchangers (PFHE) or coil-wound heat exchangers (CWHE), columns, e.g. distillation or adsorption or wash columns, machines like compressors, boosters, turbines, pumps, cold boxes, etc. For example, process engineering plants can be plants for producing specific gases like air separation units, natural gas plants, ethylene plants, hydrogen plants, adsorption plant, etc.

Power consumption of a process engineering plant particularly depends on the efficiencies and performances of the various components. Usually process engineering plants are operated with different scenarios and product combinations which often depend on customer demands. Operating scenarios of that kind may not always yield the best possible operation of the process engineering plant in terms of power consumption. However, it is desirable to optimise the power consumption of the plant, since even one percent improvement in plant efficiency can save up to hundred kilowatts of power.

Disclosure of the invention

According to the invention, a method for operating a process engineering plant and a computing unit for performing this method with the features of the independent claims are proposed. Advantageous further developments form the subject matter of the dependent claims and of the subsequent description.

The method according to the present invention provides an online plant optimiser or an online plant optimiser and rating tool, which comprises three different aspects, i.e. a three-way use.

In a first aspect the online plant optimiser enables an online plant review. For this purpose, the component monitoring modules are provided, in particular for monitoring the corresponding plant component, i.e. for performance rating and efficiency monitoring of the corresponding component. The different monitoring modules for the first aspect, i.e. the online plant review, evaluate sensor data of the corresponding plant component and compare the sensor data with design or archive data.

In a second aspect the online plant optimiser enables an optimiser tool. For this purpose the optimising module is provided. The optimising module is provided for an optimisation of plant energy consumption and product optimisation and thus for minimising a gap between estimated and actual energy consumption. Further, the results of the online plant review, i.e. the results of the component monitoring modules can be used for the optimiser tool, i.e. for the optimising module. The modules for the second aspect, i.e. the optimiser tool, compare current and predicted power consumption of the plant with current and predicted power prices in the market.

In a third aspect, when combined with a model of the plant, the online plant optimiser enables a digital twin of the plant, i.e. the virtual simulation of the current operation of the plant. The results of the online plant review and of the optimiser tool can be used as an input for the digital twin. The digital twin can be enabled as a virtual machine on a server or cloud. Further, several digital twins of several plants can be connected with each other and can exchange their input data and results. Therefore, data gathered during optimisation of one plant can be used for optimisation of another plant. For the third aspect, i.e. the digital twin, a theoretical model of the plant which was created during a planning or designing phase can be operated with current operating data of the plant.

The present method of operating a process engineering plant addresses critical issues, which are required in today's digital age of plant engineering in a cost-effective manner. In particular the present method enables combination of various tools or modules and further of thermodynamic data, formulas, data based empirical models in an online plant optimiser or an online plant optimiser and rating tool.

For example, the method enables a combination of an APCS system (advanced process control system), an ALC system (automatic load changer) and/or an LMPC system (linear model predictive control). By means of data exchanges with a plant control system, the plant can be operated in an optimum energy and production state.

This online optimiser with different process equipment "Smile" modules and optimisation related modules can also be implemented with any plant automation software such as Aspen one, gProms, Aveva Simcentral and any other plant automation software. Equipment modules can also be programmed in Excel and used for plant performance monitoring.

Further, the present method enables a dynamic digital twin of the plant using data from the online plant optimiser and rating tool to use e.g. in 3DME models and/or smart plant 3D models, which can be created for each and every plant while designing the plant. Thereby, operational, maintenance and design history for each and every plant component can be stored for lifetime performance analysis. Smart plant based models connected with 3DME can be used for visual display of plant information. These models can be used for providing a dynamic plant digital twin, where dynamic plant data from the online plant optimiser can be directly shown.

A plant power consumption e.g. of air separation plants and other gaseous plants depends upon efficiencies and performance of the components e.g. compressors, booster, turbines, pumps, cold box equipment etc. A plant is often operated with different scenarios and product combinations such as less liquid, more gas or in turndown scenarios which often depend upon customer demand. This gives rise to different production scenarios and different input airflows and pressures of components like main air compressors, booster air compressors, and different operating conditions for turbine boosters which are chosen either based on existing process calculations, short cut calculation methods or operator experience. It may not always be the best point of operation in terms of power consumption. By means of the present method, energy optimisation of the plant can be achieved. Even one percent improvement in plant efficiency can save few hundred Kilowatts of power.

In particular, by operating a process engineering plant according to the present method, the following advantages and possibilities can be provided.

Power and performance deviations can be analysed for components using online performance monitoring by means of the component monitoring modules. Efficiency, critical health indicator monitoring can be provided to track the performance of the components at various operations points and compare the deviations in power. Operating conditions may deviate from optimum point of operation e.g. giving rise to a totally different heat exchanger profile. By means of the present method online pinch analysis and heat integration can be performed for calculating the detail analysis of heat exchanger profile inside the heat exchanger for overall power optimisation. Cold balances, machine efficiency estimation, mass and enthalpy balances, pinch analysis and heat integration can be performed online. Online rating of compressors, turbines and plant equipment for overall optimisation of energy consumption at any point of operation can be performed by the online plant optimiser. Flexibility of operation using LIN injection, LOX Injection, tank volume availability, gas buffer tank capacity, and demand prediction can be provided.

The present method provides a possibility for carrying out performance rating of machine and cold box equipment online, which can be done in the online plant optimizer. An argon optimised mode for increased argon production can be provided. Product and energy optimisation can simultaneously be carried out. Regression models for predicting machine efficiencies, power, turbine flows, booster flows, Joule-Thomson stream and other process parameters can be updated online even while the plant is operated. Parameter fitting can be done online with the help of machine learning techniques, thus making the data based models more accurate for prediction. Trained models can further be used and copied for other machines and plants, e.g. for reducing operating costs from the beginning of plant start up. The online plant optimiser provides production envelopes online where extreme boundaries of liquid production, gas production can be represented and better operative decision can be taken. A precise optimised point of operation can be provided. An operational gap between estimated energy consumption and current energy consumption can be minimised. Integration of online plant optimiser with 3D smart plant can create a high performing digital twin of the plant in a cost-effective way.

An online performance rating and efficiency monitoring of each and Individual plant component (e.g. machines, plant equipment) can be provided, which can further be used for energy optimisation, plant design and quality monitoring. An online plant energy consumption and product optimisation can be provided for minimising a gap between the estimated and actual energy consumption and for adapting to the cluster demand. An integration of real time data or DCS real time data and the plant optimiser with 3D smart plant model can be provided for creating a high performing digital twin of the plant. A master twin can train the new twin for fast start up and stability. Predictive maintenance can be performed e.g. for condenser safety and thermal stress monitoring of critical pipelines, vapour lifts and heat exchangers. Online demand prediction of liquid and gases and estimation of production envelopes can be performed.

Gaps between actual plant power and model power can be minimised or closed using a real-time plant optimisation without the need of operator Intervention. Operators can control several plants at a time and the online plant optimiser can take care of real time optimisation without much interference from the operators. Several regional plants which can have geographical proximity can be clustered as interconnected virtual machines for a better demand planning based on upcoming demand, plant restrictions, tank capacities and operational efficiency. Each plant can be represented as a virtual machine e.g. on a server. Each plant can therefore be operated with best possible power consumption and operational efficiency. A machine learning program can be provided which can further ease decision making. For example demand planning can be done from a cloud data. Local data can be made available for several interconnected plants for operating plants at best possible efficiencies and for avoiding or postponing plant shutdowns. Gas cylinder consumption data, data of customer production planning assessed on cloud applications can be used such as sales force, clustering of liquid demand across regions by machine learning. Plant turndown restrictions, plant efficiency, power prices, liquid available can be used to predict and plan the demand for each plant properly. Estimation of plant power consumption in a range of ± 5% of current operation point can provide a valuable insight and overcome turndown restrictions and take best operational decision based on power prices.

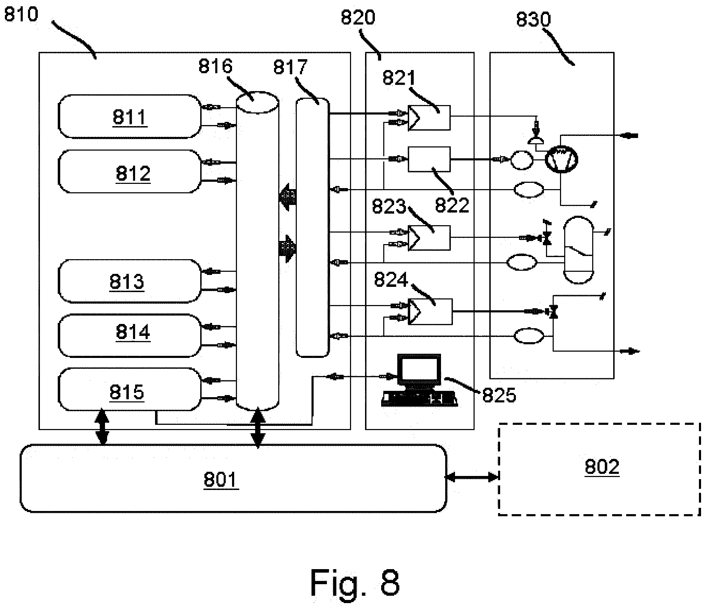

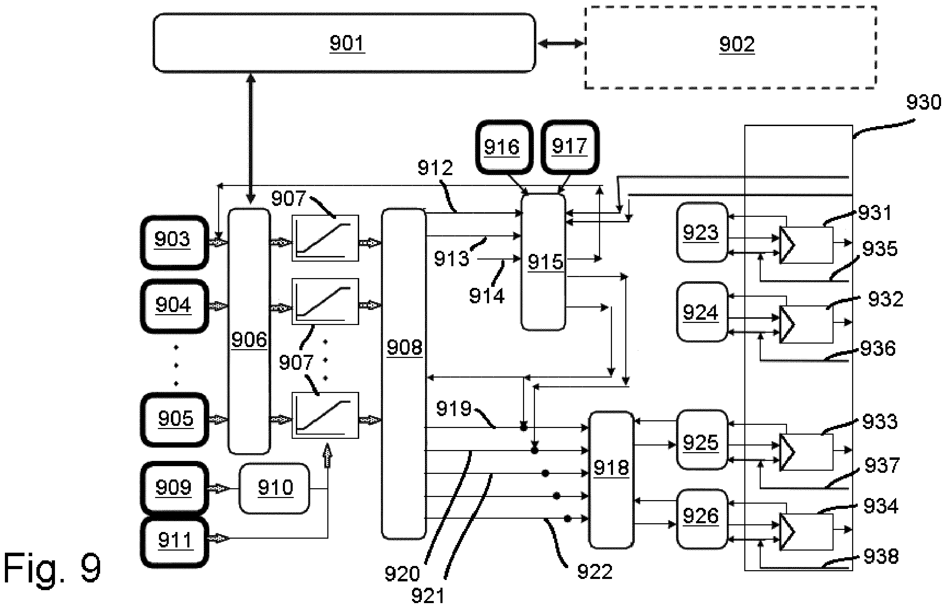

The online plant optimiser according to the present method can particularly be integrated with existing process control system like an advanced process control system (APCS) or a linear model predictive control (LMPC), as e.g. shown in Fig. 8 and Fig. 9. APCS can consist of ALC (automatic load change program), real time data base program as e.g. shown in Fig. 8. LMPC can consist of an advanced process control system with dynamic controllers with steady state point calculators. The online plant optimiser can be used for finding a global optimum for energy consumption and predicting the process parameters considering all constraints of plant components performing real time optimisation. The online plant optimiser can consider machine efficiencies and surge line restrictions and can further perform online mass balances, cold and enthalpy balances, pressure drop calculations, column analysis, cooling water temperatures, refrigeration duties, cooling tower duties and other possible parameters for plant optimisation. Results obtained by the online plant optimiser can be compared with the steady state optimisation using plant flowsheet (e.g. "Optisim" or "Smile" module flowsheets) with current production on the plant, ambient conditions, and cooling water temperatures. The online plant optimiser can be used with automatic load change program for steady state optimisation. Data exchange between real time data or DCS real time data and the online plant optimiser through real time databases can be provided with APCS and/or any Plant Automation software like Aspen one, Aveva Simcentral, gProms, etc., or "Smile" or "Optisim" modules and/or their functionality can be directly implemented in a plant automation and control software. The online plant optimiser can also be used as an online plant review tool where a customer can check overall performance of the plant and make necessary changes in operating conditions. Product optimisation such as an argon optimised mode can also be selected. Other products can also be optimised online by keeping the plant stable. Customers can perform an online plant review using a cloud based service.

The present invention helps to estimate on stream efficiency of the machines such as main air compressors, booster air compressors and booster turbines and calculates the operating power, which can further be improved by selecting the best operating efficiency from the efficiency curve using an online optimiser.

The online Optimiser can continuously optimise the plant at different ambient conditions and can close the gap between optimised energy consumption and actual energy consumption. The online optimiser has several different modules and performs global optimisation exercise between various process modules for overall improvement of energy considering demand in future, plant restrictions and tank capacities.

The online plant optimiser further offers the following advantages: Online Performance rating and efficiency monitoring of each and individual plant component (machines and equipment) can be provided. Online plant energy consumption and product optimisation can be provided for minimizing gap between the estimated and actual energy consumption. Predictive maintenance for compressors and turbines can be provided by monitoring critical parameters and applying machine learning. Recording instances and their durations, deviations in vibrations, cooling water temperature rise, oil temperatures. Preventive actions can be taken to avoid any failures. Integration of real time data from online plant review and optimiser tool with three-dimensional model can create a high performance digital twin model in a cheap way. 3D smart plant model, "Optisim" steady state flowsheet can be created already while designing the plant and hence can be used in plant optimiser, thus reducing time of execution and cost for creating a digital twin. Further cost reduction for creating an online optimiser can be achieved if "Optisim" modules are directly connected to the plant automation software. Predictive maintenance for condenser safety and thermal stress monitoring of critical pipelines, vapour lifts and heat exchangers can be provided. Online demand prediction of liquid and gases and estimation of production envelopes can be provided. It can be used as a tool for operator training, a cloud based tool for performing plant review online and additional add ins for current plant automation software for increasing its precision. When connected with smart plant 3D models, a high performing digital twin can be created. Performance and equipment rating data and data based correlations can be used for plant design purposes such as thermal stress correlations for performing a so called Hazan analysis of heat exchanger, HETP measurements for packings, rating of columns, correlations for efficiency estimations of machines. Rating data of equipment, quality data like thermal stresses, efficiency and performance related data can be provided. This data can be integrated with PDM ASU where all standard components are stored.

Direct "Optisim" simulation functionalities can be used. Thus, an optimum point of operation can precisely be calculated. Various operating points and production scenarios can be compared in terms of plant production, energy consumption, machine efficiencies and thermal stresses and process safety aspects. Lifetime rating of machines, cold box equipment, and packings can be done. Collected data can be used for analysis of packings, column performances, heat exchanger performances, condenser safety aspects regarding hydrocarbon accumulation. This data can be used for design changes, troubleshooting and root cause analysis, safety and failure incidences. If data collected online and analysed properly, preventive actions can be taken and major accidents and safety failures can be avoided. Machine learning applied for process optimisation can be used for improving correlations for predicting process parameters, flows and improving the process optimisation process. Machine learning applied for demand prediction can be used for choosing an operating point when demand is unknown. Online optimiser can help in improving an operating margin and can thus improve profitability of plant operations on a continuous basis by considering plant safety aspects such as predictive maintenance of condensers, thermal stress monitoring of heat exchangers, vapour lifts and other important pipelines.

The present efficiency and performance estimation tool for machines and plant components according to the invention can be used for lifetime performance monitoring of the plant. Further insights for aftersales service as well for performance reduction can be provided over a period of time, which can further be used to compare performance of machines, plant components from different manufacturer for quality monitoring and improvement purpose. Lifetime rating of the machines and plant components can be integrated into sales force and procurement databases for quality improvements of plants when placing a new order.

Customer can compare the cost and quality of machines and plant components and take an appropriate decision. Data based empirical models can be copied from one plant to another for identical and repetitive plants reducing further cost of creating a plant optimiser and digital twin. Each plant is represented as a virtual machine and interconnected plants are a network of several virtual machines on a cloud or on a server. When these plants are connected with each other, they can learn from each other and can be clustered together according to their geographical locations for demand planning. Thus, they can be operated at best possible efficiency for proper asset optimisation. An interconnected network of plants can further be integrated with cluster demand planner, where flexibility of operation of each and every plant can be taken into account for demand planning with best possible operational efficiency and cost. For this purpose, machine learning can be applied. By proper demand planning, plant assets can be optimised collectively and each plant can be made more flexible by overcoming its turndown restrictions. Reduction of start up times can be provided for commissioning of plants.

For third party customer with an existing plant, a digital twin or a plant optimiser can easily be created according to the present invention. Interconnected plants learn from each other and plant performance can be improved. The online plant review and optimisation tool can be offered as cloud based service for customers. Once online rating data is available for machines, pumps and other plant components, it can be integrated with sales force data base or procurement data base using a block chain approach for quality monitoring and improvement purposes. Data such as technical problems, vibrational problems, efficiency depreciation on annual basis, higher power consumption issues can be reported. Demand planning using a machine learning algorithm can be used for cylindering station and liquid production and planning. Real time plant review and optimisation of plants fits properly for creating a digital plant products and services. Operator training can be carried out with the digital twin or the Plant optimiser model. A continuous chain of learning and reporting can be created from plants and design relevant data can be gathered for designing new plants.

Preferably, the specific component is one or several of the following: a booster, a compressor, a turbine, pump, a cold box, a heat exchanger, a column, a condenser, a precooling unit, a molsieve, a pipe, a valve.

According to a particularly preferred embodiment one or several of the following modules are provided as the at least one component monitoring module: a machine module, a heat exchanger module, a column module, an ambient condition tool, a pre-cooling, molsieve module, a condenser module. Preferably, these modules are programmed by means of the software "Smile" or "Optisim".

Advantageously, one or several of the following modules are provided as the at least one optimising module: a vapour lift and piping thermal stress monitoring module, a plant production envelope, an energy cost and demand prediction module, a plant steady state flowsheet optimiser. Also these modules are preferably programmed by means of the software "Smile" or "Optisim".

The process engineering plant is advantageously an air separation unit and/or a natural gas plant and/or an ethylene plant and/or a hydrogen plant and/or an adsorption plant.

A computing unit according to the invention is, in particular programmatically, configured to carry out an inventive method, i.e. comprises all means for carrying out the invention.

Further aspects of the invention are a computer program with program code means for causing a computing unit to perform a method according to the invention, and a computer readable data carrier having stored thereon such a computer program. This allows for particularly low costs, especially when a performing computing unit is still used for other tasks and therefore is present anyway. Suitable media for providing the computer program are particularly floppy disks, hard disks, flash memory, EEPROMs, CD-ROMs, DVDs etc. A download of a program on computer networks (Internet, Intranet, Cloud applications, etc.) is possible.

Further advantages and embodiments of the invention will become apparent from the description and the appended figures.

It should be noted that the previously mentioned features and the features to be further described in the following are usable not only in the respectively indicated combination, but also in further combinations or taken alone, without departing from the scope of the present invention.

In the drawings

Fig. 1    schematically shows a preferred embodiment of a method according to the present invention as a block diagram,

Fig. 2    schematically shows a diagram of $N_2O$ concentration in dependence of $CO_2$ concentration at an inlet and at a sump of a condenser of a process engineering plant, which is operated according to a preferred embodiment of method according to the present invention,

Fig. 3    schematically shows a preferred embodiment of a method according to the present invention as a block diagram,

Fig. 4    schematically shows a preferred embodiment of a method according to the present invention as a block diagram,

Fig. 5    schematically shows a preferred embodiment of a method according to the present invention as a block diagram,

Fig. 6    schematically shows a preferred embodiment of a method according to the present invention as a block diagram,

Fig. 7    schematically shows a system of a distant compute unit and virtual machines, which is operated according to a preferred embodiment of method according to the present invention,

Fig. 8    schematically shows a preferred embodiment of a method according to the present invention as a block diagram, and

Fig. 9    schematically shows a preferred embodiment of a method according to the present invention as a block diagram.

Detailed description of the figures

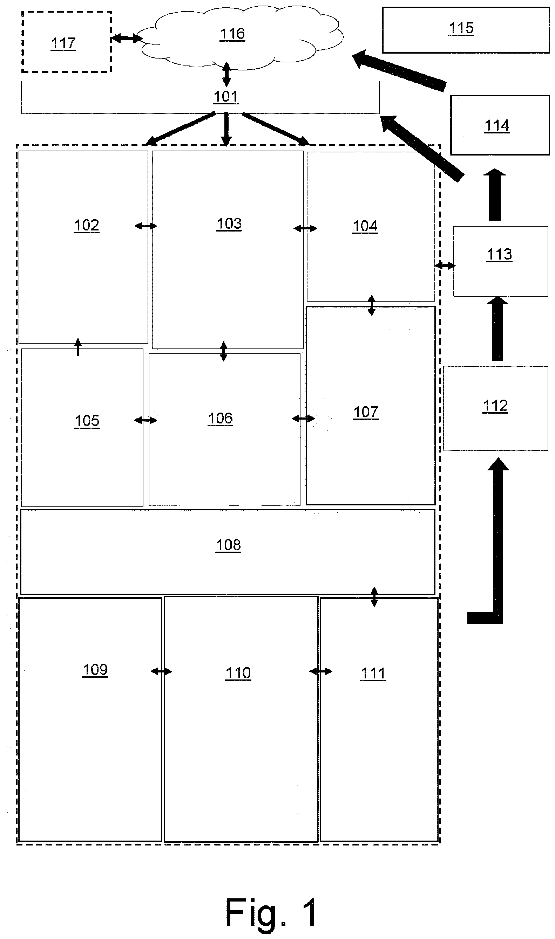

Fig. 1 schematically shows a preferred embodiment of a method according to the present invention as a block diagram.
Block 101 represents an online plant energy & product optimiser, performance and rating tool. Block 101 thus particularly represses an online plant optimiser or an online plant optimiser and rating tool.
The present method of operating a process engineering plant addresses critical issues, which are required in today's digital age of plant engineering in a cost-effective manner. In particular the present method enables combination of various tools or modules and further of thermodynamic data, formulas, data based empirical models in the online plant optimiser 101.
The online plant optimiser 101 comprises several modules, in particular a machine module 102, a heat exchanger module 103, a column module 104, an ambient condition tool 105, a pre-cooling, molsieve module 106, a condenser module 107, a vapour lift and piping thermal stress monitoring module 108, a plant production envelope 109, an energy cost and demand prediction module 110, and a plant steady state flowsheet optimiser 111.
From these different modules 102 to 111, optimised process parameters and outputs from data based empirical models are derived. Block 112 represents these optimised process parameters and outputs from data based empirical models.
These parameters and outputs 112, which are provided by the online plant optimiser 101, particularly by the modules 102 to 111 of the plant optimiser 101, are used for an optimum control of the process engineering plant. For this purpose, these parameters and outputs 112 are submitted to a plant automation software 113, e.g. an advanced process control system (APCS) or Aspen, Aveva Simcentral, gProms, etc. The APCS 113 communicates with a plant DCS system 114.
The plant automation software such as APCS 113 and the DCS 114 can exchange data with a distant computing unit 116, particularly a cloud platform of a local installation of a cloud virtual machine network. For secure data exchange a block chain platform 115 can be used.
A digital twin 117, e.g. a plant 3D digital twin model, can be enabled as a virtual machine on the cloud116. The results of the online plant optimiser 101 are used as an input for the digital twin 117. For this purpose, the online plant optimiser 101 can exchange data wit the cloud 116.
The machine module 102 preferably evaluates online machine efficiencies, performance curves and power estimation for boosters, compressors, turbines, pumps, etc. in the plant. Further, the machine module can perform online rating using data from manufacturer and anti-surge controllers as well as predictive maintenance. Further, the machine module 102 exchanges data with real time databases (RDB) or DCS 114 for input and output values for performance monitoring and predictive and preventive maintenance.
Further, the machine module 102 particularly performs one or several of the following functions:
Compressor, booster turbine, cryogenic pump performance curves from manufacturers can be scanned and digitalised. Machine surge lines data from anti-surge controller for compressors can be evaluated. Isentropic efficiencies and polytropic efficiencies can be estimated online for given ambient conditions. Efficiencies are estimated using empirical as well as standard formulas. Empirical formulas are updated online from every well optimized case. Powers flows of machines are calculated online using empirical formulas. Databased correlations can also be developed for estimating the efficiency of the machines. Databased correlations can be updated using correct data from the plant and the data based models can be trained using machine learning program. Operating point controllers can be used to precisely control compressor, booster and turbine flows to maintain them dynamically at a best point of operational efficiency. Also flows are recalculated directly from dp measurements to avoid any errors in flow measurements. Power, efficiencies, performance curves of compressors, turbines, boosters and pumps can be estimated online for life performance monitoring. Also other critical indicators essential for machine health can be monitored. Critical instances and deviations are recorded. By means of help machine learning programs major shut down failures can be avoided.

Predictive maintenance of compressors, turbines, boosters, and pumps is performed. Vibrational problems can be reported using real time data such as number of incidences and duration of vibrations. Increase in intercooler approach in comparison with design values can be achieved. Database models can be created for ambient air temperatures, cooling water temperatures vs recorded intercooler approaches (rise in cooling water temperature at intercooler of each stage of the machine). Oil demister vacuum monitoring, oil temperature measurements, oil filter pressure drop evaluation can be performed. Leak detection by comparing results of flows from simulations and real time data can be performed. Readings mentioned in mechanical running test record can be compared with current values to observe any large deviations, such as oil reservoir levels, oil cooler temperatures and vibrations.

Of each and every stage bearing temperatures can be observed. When large deviations are observed, instances and their durations can be recorded and operators can be informed about any preventive actions which can be taken. Different alarms are analysed. The number of instances and duration of the incidences are recorded when alarms are triggered and actual values are higher than the design values. This can be reported on a predictive maintenance window of each machine and preventive actions can be displayed.

Also machine learning and artificial intelligence program can be used for monitoring critical parameters of machines (compressors, turbines) and their auxiliary systems such as lube oil system, air filters for machine reliability, predictive and preventive maintenance.

Pump efficiencies can be estimated using digitalised curves from pumps. Performance can be monitored using machine efficiencies, power consumption other critical parameters. Pump performance can be monitored by analysing critical parameters on a continuous basis such as increase in power consumption or efficiency deterioration. Operating point controllers can be used for pumps which can adjust the pump head according to process requirements. Pressure differences across pumps can be monitored for cavitation protection. Suction pressure, discharge pressure, $P_{in}$, $P_{out}$, bearing temperature, voltage, frequency, vibration at different points, speed can be compared and analysed using machine learning data.

Databased Models can be used to calculate pump head, pump speed and pump efficiency.

Cavitation detection and protection counter can be performed online along with performance curves. Loss of prime detection and protection timers can be monitored. Number of instances and their durations can be recorded to avoid any major damage to pumps. It can be also possible to give an automatic feedback for replacing some parts of pumps, seals or oil for predictive and preventive maintenance.

The heat exchanger module 103 preferably performs online QT (enthalpy temperature profile) profile calculation, heat integration, pinch analysis of heat exchangers, online cold balance calculation, online mass and enthalpy balance calculation, online kf rescaling (wherein kf is the heat exchanger surface in [kW/K]), and pressure drop calculation, online thermal stress monitoring using empirical correlations (predictive maintenance). Preferably, online rating of heat exchangers is performed in the heat exchanger module 103.

Further, the heat exchanger module 103 particularly performs one or several of the following functions: Recalculation of turbine flows, booster flows, Joule-Thomson flows based on cold power and enthalpy losses can be performed. Online cold balance and mass balance can be performed. Flow recalculations can be performed based on exchange losses, turbine cold power and empirical correlations. Various data-based correlations used for estimating process parameters and machine learning can be used for further fitting the data and improve accuracy of databased models.

Heat integration and pinch analysis can be performed online. Thermal stresses can be estimated based on the empirical correlations. These correlations for estimating thermal stresses can further be used for designing heat exchangers for predicting thermal stresses since thermal stresses result from similar process topologies, deviations of turbine inlet temperatures and pressures. This can reduce the risks in designing new heat exchanger for a similar process and can e.g. avoid some iterations for performing a so called Hazan analysis for new plant designs. New models can be created for predicting flows, power consumptions and other process parameters. Influence of various parameters on plant power can be predicted. An online energy optimisation of the plant can be performed and optimised process parameters can be predicted. Reverification of flows and powers using e.g. power models and other empirical correlations can be performed for parameter estimations. Data based models can be created and updated online using a machine learning algorithm.

Also artificial intelligence and machine learning programs along with online optimiser can be used for monitoring critical parameters of heat exchanger modules for process optimisation and process safety failures. Critical process parameters include thermal, mechanical stresses, deviating turbine inlet temperatures, temperatures, pressure, product purities, pressure drops. Monitoring temperatures profiles during cool down and shutdown of the plant can be performed to avoid damage to the heat exchangers, uniformity of temperature difference across various blocks of heat exchangers to avoid thermal stresses. Monitoring enthalpy temperature diagram and pinch profile online can be performed continuously for optimising energy consumption of the plant.

The column module 104 preferably performs online rating, online calculation of number of stages, HETP, calculation of reflux flows, purities for given product configuration, vapour liquid ratios, online mass balance, column concentration profiles and predictive and preventive maintenance for flooding, weeping and packing or column internal damage inside the columns.

Further, the column module 104 particularly performs one or several of the following functions:
A column performance is monitored online. Parameters are estimated online like Vapour/Liquid ratio (F/D), height equivalent to theoretical plate (HETP), number of theoretical trays, mass balance across the column, level inside the columns, liquzid hold up on trays, argon recovery, argon transition, oxygen recovery (all oxygen products), nitrogen recovery (all Nitrogen products), product purity and reflux flows. Packing and tray efficiencies are estimated. Column loading diagrams showing current loading of the column can be used for estimating the further possible loading of the column and also to monitor weeping and flooding with current loading of the plant. Nitrogen, argon and oxygen yield is calculated.

Various databased correlational models are used for estimating reflux flows, argon feed flows, product flows and other parameters such as HETP, a number of theoretical trays, argon, oxygen and nitrogen yield and other important parameters are calculated. Machine learning can be applied for updating the databased correlations based on new data.

Diagrams are loaded for calculation of plant flexibility. Important information can be kept hidden to protect the design information. Measured data are evaluated in order to check performance of packings, number of theoretical trays online. Design HETP values and vapour liquid ratios are verified. Production improvement is provided such as argon optimised production or turndown possibilities based on loading diagrams.

Online rating of columns, packings and trays are performed for designing and troubleshooting of the plant. Also lifetime performance of packings and trays can be monitored using column module 104 giving further insights into their performance. Argon recovery and argon transition is estimated. Estimation of column profile and pinch points inside the columns is performed. Flow to the argon system can be optimised for higher argon production thus keeping the plant stable.

Concentrations are made available online as real time data, e.g. on DCS. Concentration at the sump of pressure column and crude argon column can be estimated e.g. with the help of micro capillary tubes for analysis purposes. Data for necessary concentrations and temperatures can be measured with the help of additional analysers. With available information real plant data can be verified. Reflux Flows can be corrected and optimized, and purities can be verified. Based on real time pressure drop measurements, flooding across each and every packing section can be estimated online. An early determination of sudden causes of flooding can be provided such that preventive action can be taken in order to prevent distillation column malfunctioning and product purity loss. Also monitoring of flooding using measurements of pressure differences (Dp) across each and every packing can provide information about flooding limit for increasing the liquid production without loosing the purity and destabilising the distillation column. Dp measurement across each packing bed and overall column is performed. Temperature profiles can be calculated on each packing using pressure and temperature (PT) analysers.

Detailed temperature profiles can also be provided by optic fibre analysers. When using only one optic fibre, e.g. 10 to 13 different points inside a packing are measured to give a temperature profile across the bed. Thus, the temperature profile can be compared with temperature profiles from calculated values e.g. using "Smile" column modules 104. Optical fibre sensors are cheap and provide multiple measurements using a single optical fibre. Further, optical fibres can be used in remote places without any electricity providing further insights over the temperature profile inside a column.

Actual thermal stresses on packings due to various temperature changes inside the column can be estimated.

It is also possible that temperature analysers are used for monitoring only a few points like a temperature at a top and bottom of the packings and also at points where the slope of temperature and concentration profile changes drastically. Further, steady state hold ups can be recalculated with the help of level calculation tools and/or directly verified or measured from DCS.

Artificial intelligence and machine learning programs can be used to monitor all critical parameters inside the column module to alert the operators about any operation abnormalities or safety failures. Also, artificial intelligence and machine learning programs can further be used for monitoring loading of the column using online column loading diagram to monitor distance from flooding and weeping point, purity losses, further possible loading of column or decrease the loading of the column for turndown.

Column loading diagrams of vapour liquid ratios, monitoring of column temperatures indications, purity indications, nitrogen ingression, oxygen ingression based on the temperature indication of crude argon internal reflux column and pressure swings inside argon column can be used for stable argon column operation. Thus, online optimiser can take necessary actions for preventing process related and/or process safety related failures once the action is decided by an operator or artificial intelligence and/or machine learning programs.

The ambient condition tool 105 preferably performs an estimation of humidity, temperature, and a pressure for current plant location as well an air quality monitoring.

Air quality monitoring includes continuous online monitoring of $CO_2$, hydrocarbons and other impurities inside the air. If the content of hydrocarbons inside the air is too high, it can cause explosion inside air separation plant. (If the total hydrocarbon content is higher than 500 ppm then it can cause explosion inside the main condenser). This is critical especially inside a large chemical/petrochemical complex with chimneys for venting out waste gases.

Additionally, artificial intelligence or machine learning programs in Python or Aveva, Aspen any other plant automation programs can additionally be used to warn about critical ambient air process conditions such as high hydrocarbon contents in air. Extremely warm conditions can be used to warn operators about reduced air flow to ASU cold box or increased level inside condenser or to start an additional cooling tower fan, a refrigeration unit, waste nitrogen flows to avoid any damage to plant components.

A complete process safety risk profile of main and crude argon condenser is analysed based on various phenomena occurring simultaneous or separately where artificial intelligence or machine learning can be employed.

Online optimiser program can take preventive actions such as reducing the air flow to the plant to reduce the loading on molsieve and absorb the hydrocarbons to maximum extent. Also the condenser purge can be increased to the maximum when hydrocarbon contents in the condenser sump are high and a warning about the dangers can be output to plant operators. Machine learning and artificial intelligence programs can even be used to monitor and predict air quality based on environmental data and actions by other plants inside the petrochemical/chemical complex.

The pre-cooling, molsieve module 106 preferably performs online calculation of outlet temperature of air based on regeneration gas temperature, evaluates cooling water flow rates, cooling water balance, and cooling tower energy consumption data, monitors pressure drops, and performs predictive maintenance.

Further, the pre-cooling, molsieve module 106 particularly performs one or several of the following functions: The precooling module 106 comprises online rating of precooling component systems where air flow, humidity, inlet air temperatures, inlet air pressures are used as input values from DCS or RDB and outlet air temperature, pressure drops are recalculated. A precooling unit pressure drop is monitored across DCAC and EVC. An optimisation between cooling tower power consumption and refrigeration unit power consumption is performed and its effect on plant power consumption is evaluated depending upon liquid production and ambient air conditions. Estimation of packing performance is performed online. Databased models can also be developed for estimating pressure drops and HETP of packings used, cooling tower duties, etc. Cooling water balance across the entire plant is evaluated.

Additionally, artificial intelligence and machine learning program provided in Python, Aspen or any other plant automation software can be used to monitor critical parameters in precooling systems such as pump failures, cooling water temperatures, flows, cooling tower parameters for preventive and predictive maintenance.

The molsieve module 106 is further used for performance and predictive maintenance. The molsieve is extremely important and it needs to be replaced fewer times during the lifetime of the plant. Overheating can be prevented which could cause molsieve baking and could deteriorate the performance of molsieves. Thermal profile inside the molsieve can be monitored using optical fibre sensors. These sensors can measure several points over the length and width of the molsieve delivering the exact data for pressures and temperatures inside the molsieve. If the molsieve is overheated then a cooling time can be adjusted to avoid any damage to the molsieve adsorber particles. If moisture is too high then a heating time or flow can be adjusted according providing an optimal performance of molsieve. If a performance is rapidly deteriorating, the molsieve cycle will be optimised and/or, if necessary, molsieve material will be changed.

Databased correlations are used for calculating molsieve timings and other parameters. $CO_2$ breakthrough, $H_2O$ breakthrough, $N_2O$ can be monitored at the outlet of the molsieve in order to avoid plant damage due to $CO_2$ ice formation and safety incidences. $CO_2$ and $N_2O$ form together mixed crystal formations, which provide surface for hydrocarbon accumulation.

Molsieve cycle temperatures can be monitored online, wherein cooling peaks indicate proper regeneration of adsorber bed. Cooling peak temperatures can be compared with previous cycles and regeneration gas flow and temperature can be adjusted.

Water and $CO_2$ plateau can be monitored and compared with previous cycles. A too long water plateau indicates overload with water during previous adsorption steps. An increased length of $CO_2$ plateau indicates high content of $CO_2$ in air. Collected adsoption cycle data can be used to optimise molsieve operation times and proper regeneration. $CO_2$ and $H_2O$ breakthrough can also be predicted from $CO_2$ and water plateau.

Also based on repeated bad regeneration alarms, baking can be undertaken for proper regeneration of molsieve. Predictive maintenance for change/increase of molsieve material can be undertaken based on molsieve operational cycle data, frequency of regeneration alarms, frequency of $CO_2$ and water breakthrough. Preventive maintenance to avoid any major safety incidences can also be undertaken based on molsieve data.

These data can provide valuable insights for performance of different materials over an entire lifetime. Necessary changes can be made for properties of molsieve materials, quantity and dimensions of molsieve vessels. Molsieves are extremely critical for high purity plants. If a molsieve performance deteriorates, then it can escape into the product. Palladium and Hopcalite quantities can be adjusted while designing the plant and can further be ordered online. A molsieve material can be pre-ordered to avoid any plant shutdown through aftersales. A performance of radial molsieve adsorbers for bigger plants can be monitored online and their cycle times can be adjusted accordingly. Molsieve timings and regeneration gas flows can be adjusted in real time for optimal performance.

Additionally, artificial intelligence and machine learning programs available in plant automation software can be used for monitoring critical process parameters of molsieve "Smile" modules such as molsieve outlet temperatures, $CO_2$, $N_2O$ outlet concentration, length of water and $CO_2$ plateau for $CO_2$ and water breakthrough, pressure drops in molsieves. If ambient air analysers are available, then hydrocarbon and $CO_2$ content of air can be monitored and predicted. Ambient air conditions can also be predicted based on the environmental data.

The condenser module 107 preferably performs online performance rating of condensers, predictive maintenance for condenser safety, evaluates mass balance and accumulation of hydrocarbons, keeps track of hydrocarbons, $CO_2$, and $N_2O$ inside the plant, and monitors co-solubility $CO_2$, $N_2O$ and hydraulic pressure drops.

Further, the condenser module 107 particularly performs one or several of the following functions:
Condenser performance is monitored online. Condenser area mean temperature differences, and, if necessary, QT profiles are calculated online for condensers. Recalculation of utilized condenser area and kf values is performed in order to optimize the plant. Pressure drops across condenser basket strainers are measured for performing online cleaning of basket strainers similar to LOX pumps in order to lower the risk of dry boiling and flow blockages.

Data based correlations are used for estimating GAN flow and enthalpy of condensation (condenser duty) and thermal stress on the condenser blocks, oxygen vapour flow, recirculation rates, estimation of total and individual hydrocarbon enrichment inside condenser, liquid level estimation. This data-based correlation then can be trained and supervised by machine learning programs for prediction and verification of values calculated by "Smile" modules.

Predictive maintenance and risk analysis of condensers is performed online. Online mass balances are performed across the plant for hydrocarbons, $CO_2$ and $N_2O$ entering the plant. Total hydrocarbons, $CO_2$ and $N_2O$ accumulated inside plant and condensers as $CO_2$ are monitored. $N_2O$ crystals tend to stay accumulated if the plant is in a cold condition. This is useful to track accumulation of hydrocarbons inside condensers and cold boxes. CO solubility of $CO_2$ and $N_2O$ is monitored online at the plant inlet and at a condenser sump. For this purpose continuous online analysis of incoming air and liquid analysis at condenser sump can be performed.

Currently for ASU plants settings are used such that the $CO_2$ concentration in incoming air is 5ppm. An operator has to shutdown the coldbox when the $CO_2$ concentration reaches 1.5 ppm and the $N_2O$ concentration 100 ppm. When total hydrocarbon content at a condenser sump reaches 500ppm, plant shuts down. However, these settings may not be adequate to avoid the accumulation of hydrocarbons and co-solubility violations for mixed crystal formation inside the condenser. Co-solubility of $CO_2$ and $N_2O$ should be checked online on a continuous basis.

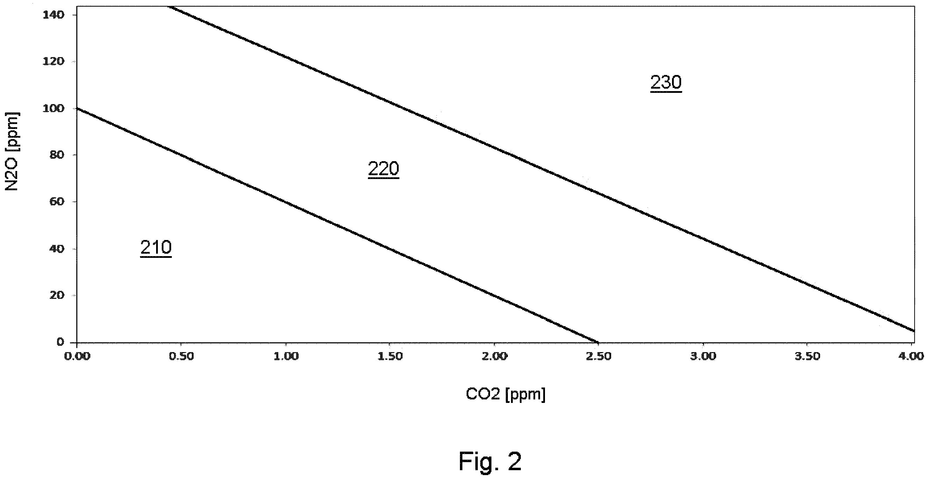

Fig. 2 schematically shows a diagram of $N_2O$ concentration in dependence of $CO_2$ concentration at an inlet and at a sump of the condenser of the process engineering plant. Figure 2 schematically shows the different areas of co-solubility of $CO_2$ and $N_2O$.

In the area 210 both components are fully solved in LOX. The area 220 represents a safety margin. The area 230 represents a region of reduced co-solubility. In this area 230 the solubility limit is reached and mixed crystals are formed.

Determination of $CO_2$ and $N_2O$ co-solubility is done at two locations online, particularly by means of the condenser module 107. Co-solubility can be calculated after the PPU:

$$PV_{co\text{-}solubility} = 40 \times CO_2 \text{ [ppm]} + N_2O \text{ [ppm]} \leq 100$$

A value of 100 indicates that 60% of the solubility limit is reached. The saturation limit is roughly defined by the following formula:

$$PV_{co\text{-}solubility} = 40 \times CO_2 \text{ [ppm]} + N_2O \text{ [ppm]} \leq 160a$$

Liquid levels in the condensers are estimated online for checking if dry boiling occurs. Total accumulation of hydrocarbons and $CO_2$, $N_2O$ crystals can be predicted using this module 107. If simultaneously dry boiling incidences occur, the deriming of the plant can be undertaken earlier. Plant shut downs are costly and if condenser levels are healthy and accumulated hydrocarbons and $CO_2$, $N_2O$ are within limits, then a shut down can be avoided. Also preventive actions can be performed in order to avoid any shutdown of the plant. Root cause and risk analysis of condensers can be performed online and preventive actions can be performed on the basis of risk analysis. Preventive actions can be taken to avoid any hydrocarbon accumulation such as cleaning of basket strainers, increasing liquid inside the condensers using turbine flow, reducing liquid production or starting an LIN injection. Several phenomena, which can cause dry boiling and accumulation of $CO_2$, $N_2O$ and hydrocarbons, can be monitored for predictive risk analysis and maintenance of condensers. An online safety report card can be shown where number of dry boiling events can be recorded, total accumulation of hydrocarbons, $CO_2$, $N_2O$ can be shown and online risk analysis matrix can be displayed.

Additionally, artificial intelligence and machine learning programs can be used for monitoring dry boing incidences, online risk profile of condensers by monitoring condenser levels, $CO_2$, hydrocarbon concentration in ambient air as well as condenser sump, recirculation ratio, purge rate of condenser, online co-solubility monitoring, number and duration of dry boiling incidences, condenser bath temperatures, improper operation of molsieve, condenser plugging, blockage of piping exchangers due to $CO_2$ ice formation, thermal stresses at the condenser blocks.

Monitoring complete risk profiles can help to avoid major safety incidences and explosions inside the condenser and preventive actions can be undertaken to avoid such incidences with the help of the online plant optimiser tool.

For risk profile monitoring, ambient air analysers and condenser sump hydrocarbon analysers can be used for hydrocarbon monitoring. Risk mitigation can be undertaken in advance based on the analyser data. With two analysers data can be cross checked and confirmed. For too high hydrocarbon content in air various steps can be taken such as reduction of air flow, increasing purge, increasing reflux and washing the condenser, draining lox etc.

For dry boiling incidences, various steps can be undertaken such as increasing liquid level inside condenser by various means such as increasing reflux, increasing turbine flows, reducing LIN product. Other troubleshooting steps can be performed with the help of operators and/or artificial intelligence and machine learning programs and executed through the online optimiser or the plant automation software such as APCS or Aspen, Aveva etc.

The vapour lift and piping thermal stress monitoring module 108 preferably enables integration with digital twin for precise monitoring of piping thermal stresses. Further, this module evaluates correlations of temperature, flow, pressure vs vapour lift. Precise vapour lift calculations can reduce the air flow to vapour lift and power consumption. Further, thermal and mechanical stress monitoring for piping and vapour lifts can be performed for e.g. oxygen pipelines, critical vapour lifts. Critical process valve failures for predictive maintenance and safety can be monitored. Mechanical stress in pipelines, joints, valves and vapour lifts can also be estimated using DCS data supplied to cloud based 3D models of plants and mechanical stress calculation software. Alternatively, data based correlations are used to estimate the thermal and mechanical stresses inside plant piping and valves.

Artificial intelligence and machine learning program features can be additionally implemented to monitor abnormalities of thermal and mechanical stresses inside piping, which can indirectly prevent any safety incidences due to piping, valve, or vapour lift failures. If there is for example a piping failure inside a coldbox due to thermal stress, then due to higher pressure perlite can come out in the air causing dust explosions. If critical oxygen valves or pipeline fail explosions can occur.

The plant production envelope 109 is preferably based on machine and cold box restrictions (e.g. machine turndown restriction, column loading diagrams, valves & pipe sizes, tank capacities). The plant production envelope 109 determines minimum and maximum limits for liquid production (LOX, LIN), minimum and maximum limits for gas production, and minimum and maximum limits for machines. The plant production envelope 109 can be updated if necessary based on ambient conditions. The plant production envelope 109 can determine an online material balance and enthalpy balance table for the entire plant. This helps to identify limitations of the plant for given product constellations and can help for making production decisions. The plant production envelope 109 or plant performance envelope can be used for product development purpose as they predict an actual possible capacity of the plant at various ambient air conditions.

The energy cost and demand prediction module 110 predicts the amount of energy consumption for jumping from one operation point to another, predicts an impact of difference in machine efficiencies and production on power, and predicts a cost impact based on current market prices. The energy cost and demand prediction module 110 further provides a production side risk management based on power prices, energy consumption, demand prediction and planning, and tank capacities. Demand prediction can be done using various sources and, if unknown, machine learning or data based models can be used.

The energy cost and demand prediction module 110 estimates the current power consumption based on DCS data and current power prices. For this purpose current energy prices are derived from market. Different sensitivity analysis is executed based on current energy prices, product configurations, the liquid available and gas requirements of customers, argon or other product optimised modes. This can help to determine best operation decisions. Interconnected Plants can be represented as a cluster of connected virtual machines on the cloud 116 or on servers. Using plant optimiser interconnected plant demand can be adjusted such that each plant operates at best efficiency.

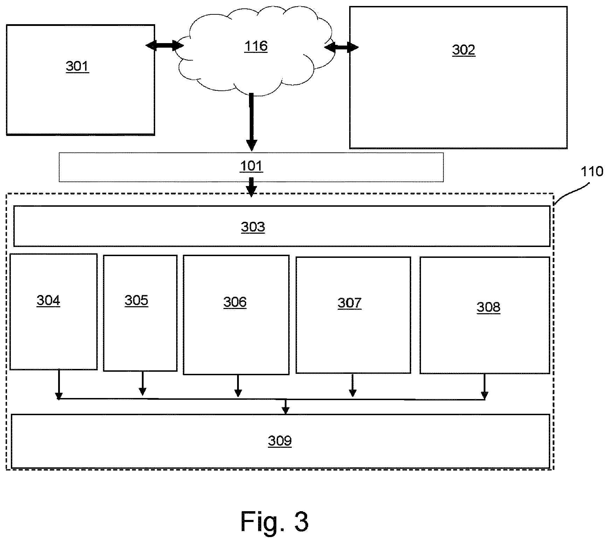

Fig. 3 schematically shows the energy cost and demand prediction module 110 according to a preferred embodiment of the present invention as a block diagram. Particularly, fig. 3 represents a decision based machine learning applied for production decisions and asset optimisation.

Block 301 represents a demand prediction from pipeline customer for a given time frame using sales force or other cloud based tool. Further, block 301 represents all known demands.

Block 302 represents interconnected plants in a region which can be represented as cluster of virtual machines connected on the cloud 116. Further, block 302 represents a demand prediction from customers using sales force. Cluster demand planning can be done using machine learning algorithm. Further, block 302 represents demand which is adjusted such that each plant can be operated at best operational efficiency.

Block 303 represents a machine learning and artificial intelligence program which can be applied to the energy cost and demand prediction module 110 for plant production planning and operating cost optimisation.

Block 304 represents current power prices and operational costs. Block 305 represents a current production scenario and a tank filling time. Block 306 represents a known demand from pipeline customer, known local demand for liquids from cluster planning on the cloud. Block 307 represents current liquid (LOX, LIN, LAR) available in storage tanks, current spare capacity available in tanks. Block 308 represents predicted demand for gas and liquid products using machine learning algorithm, based on cylinder data on the cloud, and data from pipeline customer.

Based on these information 304 to 308, in block 309 a demand calculation is performed. If a predicted demand is higher after a tank filling time then liquid production is adjusted on a higher side for a time difference between the tank filling time and a time for demand increase. If a predicted demand is lower after the tank filling time, then liquid may be reduced.

Particularly, demand and production planning can thus be adjusted. A production region can be determined where the plant power consumption is optimised based on machine efficiencies, plant constraints, power prices, tank capacity available and cluster demand adaption.

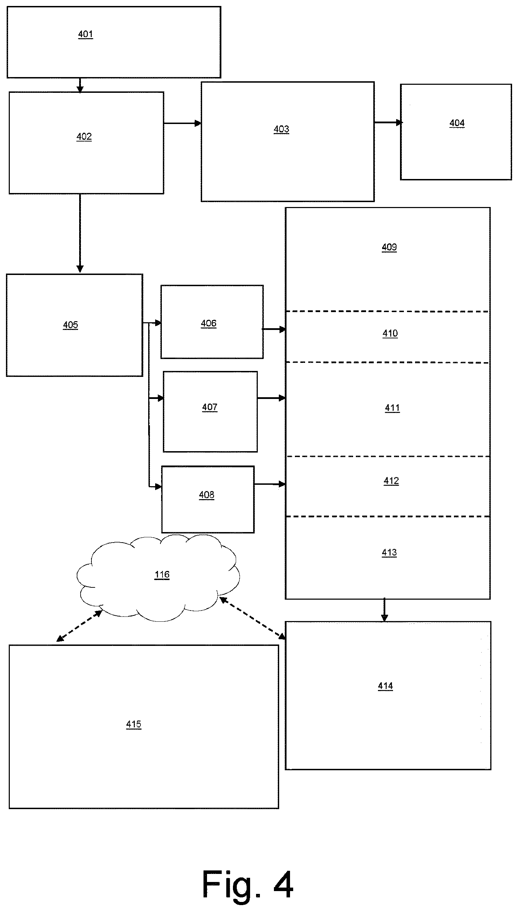

Fig. 4 schematically shows steps performed by the energy cost and demand prediction module 110 according to a preferred embodiment of the present invention as a block diagram.

In step 401 demand is calculated using machine learning algorithm for plant cluster network and local demands, tank capacities and power prices. Planning time can be divided into known and unknown demand time.

In step 402 it is evaluated whether a current production scenario matches with demand prediction from the cloud, local consumption data and machine learning algorithm and/or calculated known demand from operations.

If this is the case, then in step 403 the production case is optimised based on machine efficiencies. Further, possibilities are checked in step 403 to improve the argon yield by means of running the plant in an argon optimised mode. Further, buffer liquid capacity in tanks and additional production scenarios are checked in step 403 based on the production envelope. In step 404 the operational cost -energy savings and a possible argon yield improvement are calculated

Step 405 represents the case that the current production scenario does not match with demand from cloud, local consumption data and machine learning algorithms.

In step 406 it is evaluated whether current power prices are high, e.g. whether current power prices are larger than 5-10% of the normal price.

In step 407 it is evaluated whether current power prices are cheaper, e.g. whether current power prices are less than 5-10% of the normal price.

In step 408 it is evaluated whether current power prices are stable, e.g. whether current power price fluctuations are 0%.

In step 409 demand compensation is performed by reducing or increasing the production of liquid or gaseous products. The best possible production scenario in terms of lowest operation cost and/or improved argon yield is determined. Reduction in power and new efficiencies is estimated.

If it is determined in step 406 that power prices are higher than normal, then in step 410 plant production is optimised in terms of energy.

If it is determined in step 407 that power prices are lower than normal, then in step 411 plant production is optimised in terms of power and product. Scenarios will be available such as more liquid production and gas production and operating at higher efficiency but higher power consumption and constraint.

If it is determined in step 408 that power prices are stable, then in step 412 both energy and product optimised solutions are determined and a best solution is chosen based on demand and liquid available in tank.

Step 413 represents turndown cases. In these turndown cases often machine efficiencies are lower. Thus, resulting energy consumption may be equivalent to higher production cases with higher efficiencies. In such cases plant production is increased in step 414 based on tank volume available.

In step 414 new operation costs are calculated. Two operational points are compared. Energy consumption for argon optimised production is predicted keeping other products the same. Other possible scenarios are evaluated by keeping energy consumption constant. At every operation point a point of higher and lower efficiency is calculated where the power is ±5% and additional or lower production is shown.

In step 415 each plant is represented as a virtual machine on a server or cloud 116. Several interconnected plants or plant clusters in a region are represented as an interconnected network of virtual machines on the cloud 116 or on a server.

Optimised demand planning for each plant is performed based on plant efficiency, plant restrictions, tank capacity available, liquid available, local power prices. Machine learning algorithm and optimiser are used, then all the interconnected plants or cluster production can be adjusted such that each plant operates at best efficiency. Also, unplanned shutdowns can be avoided through proper demand prediction and planning.

Referring now again to fig. 1, the plant steady state flowsheet optimiser 111 preferably comprises several "Smile Python" or "Optisim" modules such as machine module with compressor curves, heat exchanger/cold production module, optimiser "Smile" module, column module etc. After demand planning given products are simulated with "Optisim" or "Smile" steady state flowsheets and the results are compared with real plant data. Argon optimisation can be performed and product based optimisation can also be done e.g. PGAN, GOX IC or GAN IC or LOX, LAR, Kr, Xe, He, Ne. The steady plant flowsheet is simulated with the current condition of the plant and performs energy optimisation. Entire plant data from DCS, RDB and field sensors can be connected and shown in digital plant twin model. Digital twin model is a three dimensional smart plant model where flows, pressures, temperatures, performance curves, pinch curves of heat exchangers and other plant indicators can be shown using data from online plant optimizer 101 and, if necessary, from steady state "Optisim" flowsheets. Steady State optimiser with dynamic predictive controllers offers a cheap and fast alternative for controlling, optimising, online rating and integration with digital twin plant model. Dynamic plant models are expensive to build and difficult to install. Dynamic control of the plant if connected with dynamic models and dynamic optimiser can destabilise the plant if frequently interfered with its set points and steady state operation as every set point given to controller requires some time for execution. Optimising the plant at several steady states is equivalent to dynamic optimisation of the plant and can provide stable operation of the plant. Wherever necessary, plant sensors, flowmeters, pressure gauges, concentration can be measured inside the plant for analysing the data in real time. However, it is not possible to measure each and every point inside the plant and it will become too expensive to monitor the plant in real time in the digital twin plant model. For this purpose creating and monitoring each plant component via "Smile" or "Optisim" module is an effective approach for estimating the missing flows, parameters not indicated in DCS or field sensors using only key indicators from the plant. This can effectively reduce the cost of creating an digital twin.

In the following, examples will be given for the optimisation by the plant optimiser for MAC BAC process, in terms of plant optimiser objectives, plant constraints and plant parameters:

Plant optimizer objectives: total energy consumption, product LIN, LAR, LOX

Plant constraints: tripping points of ATP valve, Vfraction at turbine outlet and inlet, efficiencies, kf values heat exchanger, JT temperature, turbine inlet temperature, minimum and maximum flow of compressors and turbines, maximum and minimum possible column loading.

Plant parameters: MAC flow and pressure, turbine flow and inlet temperature, BAC stage I pressure, stage II pressure, LIN reflux flow, rich liquid flow, LIN injection, machine efficiencies

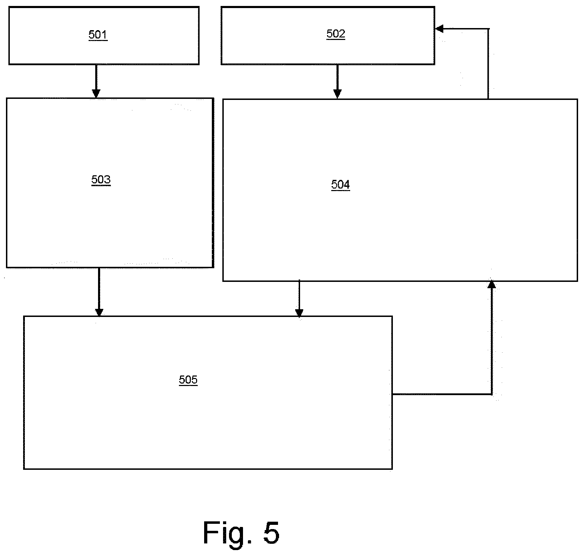

Fig. 5 schematically shows steps performed by the plant steady state flowsheet optimiser 111 according to a preferred embodiment of the present invention as a block diagram.

In step 501 data from DCS is submitted to RDB and from RDB to the "Smile" or "Optisim" flowsheet, i.e. to the plant steady state flowsheet optimiser 111.

In step 502 the "Smile Python" or "Optisim" steady state flowsheet of the plant, i.e. the plant steady state flowsheet optimiser 111, calculates energy consumption, flows, pressures, temperatures based on current production of the plant and further determines an optimised solution.

In step 503 data from DCS and from the Data from the plant (e.g. by field sensors) is submitted to the RDB and from the RDB to the online plant optimiser.

In step 504 "Smile Python" individual modules are connected with the plant components. Online "Smile" modules for rating of the plant components and for energy optimisation of the plant are provided. Plant energy consumption is optimised using optimised process parameters from optimisers. All the flows and parameters inside plant are estimated for the digital twin plant model.

In step 505 a comparison of important flows in the heat exchanger module 103, the column module 104, and other plant modules and energy consumption is performed. If energy consumption difference is larger than 50 kW and flow mismatches more than 1% with steady state then the optimisation is repeated on the plant until the energy consumption matches with simulated and predicted values. Flows can be corrected based on the data.

Referring now again to fig. 1, the vapour lift and piping thermal stress monitoring module 108 further performs one or several of the following functions: An opening is determined based on correlation of temperature, flow, pressure vs vapour lift opening. Precise vapour lift calculation can reduce the air flow to vapour lift and power. Thermal stress monitoring is performed for piping and vapour lifts for e.g. oxygen pipelines, critical vapour lift for predictive maintenance and safety. Integration with the digital plant twin is possible. The digital plant twin is created, wherein a 3D digital model of the plant is created, wherein each and every equipment and piping is shown as built. Data simulated and measured in the plant optimiser can be integrated with the digital twin model. Important pipelines such as high pressure GOXIC pipeline, pipelines with vapour lifts where safety incidences have already happened can be monitored for thermal and mechanical stresses for predictive maintenance and process safety risk analysis purposes. RDB real time database from APCS continuously gets data from DCS and other estimated data can be shown in digital Twin 3D model. Alternatively, data exchange can be automated using commercial plant control and automation software such as Aspen one, Aveva Simcentral etc. Since APCS is already implemented in more than 300 plants, the online plant optimiser can be used as an additional plugin bringing cost advantage.

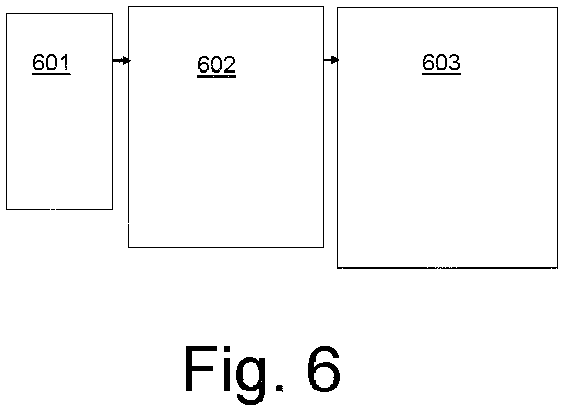

Fig. 6 schematically shows steps performed by the vapour lift and piping thermal stress monitoring module 108 according to a preferred embodiment of the present invention as a block diagram.

In step 601 real time database from APCS and real time data from DCS and field sensors are directly connected to the plant 3D model of the digital twin.

Alternatively, commercially available plant automation software with plant equipment with "Smile" module functionalities mentioned above and in Fig. 1 can be connected to a Plant 3D model to create a dynamic digital twin.

In step 602 the steady state model performs the following steps: Based on current production steady state values are calculated using "Optisim" and "Smile" flowsheets. Steady state values are updated on a continuous basis giving rise to dynamic model behaviour of the plant. For example the entire plant can be simulated using only air flow, product data and data from machines like pressures and flows. Once real-time optimisation is completed, data can be updated in the digital twin as well.

In step 603 the digital twin model performs the following steps. Thermal and mechanical stress for critical pipelines, vapour lifts, heat exchangers is shown in the digital twin model of the plant at each location. Problems can be diagnosed and seen visually. Due to continuous update of data, a dynamic behaviour can be observed in the digital twin model in a cost-effective way. Unplanned shutdown can be avoided. Process parameters can be modified such as adjusting flows, temperature, pressure, warm air to valve in case of vapour lifts. Process safety risks can also be handled visually.

In a three-dimensional digital twin, design and rating data, operational and troubleshooting history and all other useful information can be seen which is helpful for predictive, preventive maintenance, plant optimisation and other customer services. The dynamic digital twin can replicate the real behaviour of the plant and all data can be stored on the cloud for further useful services such as operator training, remote plant review, optimisation and troubleshooting services, ordering spare parts, predictive and preventive maintenance of the plants for safe operation of the plants, plant design, rating and online energy optimisation.

Operating a process engineering plant according to a preferred embodiment of the present invention yields distinct advantages, as will be explained hereafter.

Flow measurement and correction:

Precision of flow measurements can be increased using dp measurements directly and required thermodynamic data such as specific gravity of the fluids. Density data can also be used from GMPS. More accurate measurements can be done using more accurate devices and calibrating the flow meters using data from other plants connected with each other.

Precise flows can be measured by proper calibration, empirical data from similar size flowmeters. Alternative flow measurement for precise measurement can be used such as fibre optic flowmeters which are cheap and can be employed anywhere.

Further, flow estimations are possible based on valve openings and valve opening dependant correlations. Data based correlations are implemented for each and every valve in the plant where flow can be calculated with valve openings and vice versa for calculation of flows and cross verification of flow shown by flow meters.

Start up operational flexibility and minimising start up times:

Problems which are arising frequently in start up phase of plants can be eliminated and start up time can be reduced using data from other plants and using a plant automatic start up AST software. Online cleaning of LOX pumps, online cleaning of basket strainers of the cascade condensers for reducing number of shutdown times can be performed. Pre-tuning of control valves can be performed. Tuning parameters can be learned from similar and identical plants. They can be copied or pre-tuned beforehand either using cloud data exchange or from other plants. Tuning of plant control valves is a critical issue for providing stability to the plant. Well tuned plants can teach the new plant how its control valves should work. Similar or identical air separation plants can share data with each other using the cloud for initial start values thereby reducing the number of shutdowns and damage to the machinery. If several machines and plant are interconnected, a large database of control tuning parameters can be created for similar or identical plants, which can be used for start up of new plants, thus reducing the start up times and number of shutdowns in the process. Linear model prediction control (LMPC) also has an automatic start up system (AST) of a plant. Automatic start up of the plant is possible using AST software but for this purpose a well tuned plant is necessary. AST is useful for starting the plant from cold conditions and partly for warm conditions when the plant is well tuned. A well tuned plant can utilise full potential of the automatic start up program for reducing the start up failures. If AST is used the duration and cooling down rate can also be fixed for avoiding any additional thermal stresses on the equipment. Flowmeters and instrumentation transmitter ranges can also be calibrated properly from the start using manufacturer data or data from other plants if unknown to avoid any delay in plant start up and false measurements. Process control functionalities and logic diagrams can be replicated for identical and similar plants.

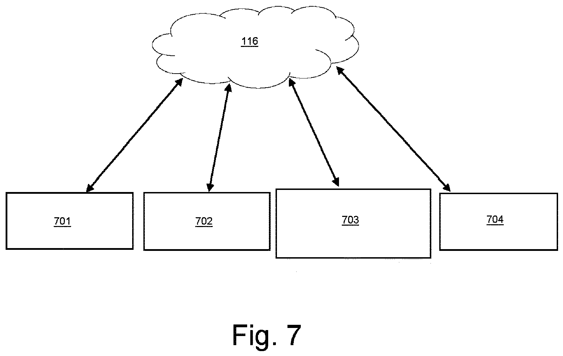

Fig. 7 shows a system of the cloud 116 and several virtual machines 701, 702, 703, 704, each virtual machine representing a corresponding plant. The virtual machines 701 and 702 can e.g. be master digital twins. Virtual machine 703 can be a new digital twin similar or identical to the plant corresponding to the virtual machine 701. The virtual machines 704 can also be a new digital twin. Similar or identical plants can exchange data during their start up phases and/or during their normal operation phases. They can exchange tuning parameters, various data based correlations from machine learning programs, calibration data from sensors, transmitter ranges, process control functions to reduce the start up time of the plant and production data for demand optimisation and prediction.

Spare part and inventory sharing for reduction of maintenance cost of existing plants and reduction of total cost of ownership of new plants:

Inventory usage, availability of spare parts, history of plant maintenance can be tracked using cloud data for trouble shooting purposes. Tracking repetitive problems inside the plant, inventory and spare parts sharing with other plant sites reduces total cost of ownership for new plants for identical and similar plants. This information can further be shared for quality and cost monitoring purposes for procurement department. For Product and Life cycle management this data can be extremely helpful. For example, when inventory is available, upcoming new plant can be chosen and designed such that inventory sharing can be possible, thus reducing total cost of ownership and excess or lower production from cluster. This is an iterative process and inventory and cluster data is required for making an informed decision. Inventory pooling and sharing can also be carried out with 3rd party customer. Thus a customer can take advantages of a spare part pool and reduce its total cost of ownership also against a payment. Life time performance of plant and its components can be monitored for quality monitoring purposes. Design relevant data can be integrated into a PDM ASU databank directly from the plants. Data based correlations for thermal stresses of heat exchangers can be performed for estimation of thermal stresses of new heat exchanger with similar process topology, HETP relevant data, equipment rating and quality monitoring data for equipment. Product envelopes with average production data for each plant types can be stored in the PDM ASU databank. Usually it needs three to four months time for estimating thermal stress analysis for performing a so called Hazan analysis on a new heat exchanger. This time can be reduced using an empirical correlation from heat exchanger for conceptual Hazan during conceptual bidding phase.

Model creation, device and data security and cost advantages:

"Optisim" steady state model for process simulation is created for each and every plant, plant design purpose and project bidding phase. "Optisim" plant modules already created can be converted into "Smile Python" modules. "Optisim" plant module conversion to "Smile Python" modules may be done using automated processes since "Optisim" is also based on "Python" for further cost savings. Plant modules together create an online plant optimiser. Plant and product design can adapt to the market and cluster demand changes for using standard plant products and plant components. This is done using online demand planning, prediction and adjustment modules of the plant Optimiser. This process gives rise to online plant product design. Advanced software process control is created for each plant, which is purchased as an additional product for advanced process control, and is integrated with online product optimiser for plant optimisation and DCS. Online plant optimiser can be integrated with 3D piping model of the plant. Plant control systems are created for designing and running the plant. This can reduce the cost of plant digitalisation and the number of sensors and analysers used for gathering real time plant information.

A cost effective approach for creating an online plant energy and production optimiser is provided, which can father be used as online plant review and equipment rating tool and predictive maintenance tool. When Integrated with 3D piping model a high performing digital twin model is created. An operator training tool, online lifecycle management and online product development tool for total cost of ownership reduction and plant standardisation is provided. Each plant is represented as a virtual machine on a single computer. Several plants can be represented as virtual machines on a single computer, thus reducing cost of infrastructure. Several plants can be represented as interconnected network of virtual machines learning from each other on a single network computer. Using already Existing IT infrastructure, security measures available for APCS Plant control systems and using virtual machines for each plant creates savings in cost of running a digital plant infrastructure. Once information is in the cloud, it can be connected to already created 3D piping models for showing and analysing real time plant data for creating a high performing digital plant twin. Cloud data can further be integrated to other systems such as sales forces, procurement and vendor data banks, spare part data bank, PDM ASU databanks for demand planning and adjustment for online product designing and standardisation of plants or plant components. ASU product data bank and information exchanges can be done using block chain for protecting the data and creating cost effective digital infrastructure.

Fig. 8 schematically shows the online plant energy optimiser and rating tool 801 with software modules of an advanced process control system APCS 810.

Block 802 represents real plant data which can be integrated with a three-dimensional digital twin model. Block 830 represents the process plant.

The advanced process control system APCS 810 comprises an operator interface (OPI) 811, a control module (CTR) 812, a message module (MSG) 813, a trend module (TRE) 814, an OPC server module (OSV) 815, a real time database (RDB) 816 and a DCS driver or OPC client 817..

DCS 820 performs a basic control and comprises an FIC block 821, an HS block 822, an AIC block 823, an FIC block 824, and a computing unit 825, e.g. a PC.

Fig. 9 schematically shows the online plant energy optimiser and rating tool 901 integrated with ALC/LMPC and a three-dimensional plant model 902 for creating a dynamic plant digital twin.

Block 903 represents a product setpoint, e.g. GOX. Block 904 represents a product setpoint, e.g. LIN. Block 905 represents a product setpoint, e.g. LOX.

Block 906 represents an operation point calculation. Blocks 907 represent product ramps.

Block 908 represents a static state and dynamic controller model.

Block 909 represents a transition start. Block 910 represents a constraints interlock. Block 911 represents a transition stop.

The static state and dynamic controller model 908 transmits an LPC temperature 912, a JT temperature 913 and LV limits 914 to a MACS runtime 915. Block 916 represents a CN select, block 917 an LMPC On/Off function.

Further, the static state and dynamic controller model 908 transmits currents states to a static SP model 918, e.g. an air flow 919, a LIN flow 920, an HPGOX flow 921, and a BAC flow 922.

Blocks 923, 924, 925, 926 represent a DCS access control. The DCS basic control 930 comprises FIC blocks 931, 932, 933, and 934. Further, process values 935, 936, 937, and 938 are provided.

Summarising, all the modules created, and their functionalities mentioned above and shown in Fig. 1 for evaluation of each component for plant process safety, energy optimisation, rating and process data estimation can be used with any plant automation software including APCS and all features are unique.

According to the present method local "Smile" python modules or plant equipment modules with same functionalities in any other plant automation software are connected with each component/plant equipment and evaluate missing plant equipment data hence minimising the number of sensor and instrumentation required to measure the data lowering the cost of dynamic digital twin and online plant optimiser for plant optimisation and process safety. All local modules are connected with each other and are used to evaluate a current state of the plant, which then can be optimised using at least one of the modules 111, 109 and 110. Module 111 can find a local optimum based on local plant condition and demand. Modules 111, 110 and 109 can provide a global optimum based on demand planning and tank volume and energy price.

The process model created with modifications and functionalities is used to optimise and compare the current plant conditions at any point of operation. The online plant optimiser according to the present method can particularly be integrated with existing process control system like an advanced process control system (APCS) or a linear model predictive control (LMPC). APCS can consist of ALC (automatic load change program), real time data base program. LMPC can consist of an advanced process control system with dynamic controllers with steady state point calculators. Alternatively, these plant modules and their unique functionalities/parameter calculations can also be incorporated with any other commercially available plant automation software. Use of artificial intelligence and machine learning programs to monitor various critical processes and equipment parameters mentioned above for plant safety and optimised operation is also possible.

**Claims**

1. A method for operating a process engineering plant,

   wherein at least one component monitoring module (102, 103, 104, 105, 106, 107) monitors a specific component of the process engineering plant, wherein an efficiency of the specific component is evaluated in dependence of current data characterising a current operation of the specific component and in dependence of design data characterising a design operation of the specific component,
   wherein at least one optimising module (108, 109, 110, 111) determines an optimum energy consumption and optimum process parameters for operating the process engineering plant in dependence of a result of the evaluation performed by the at least one component monitoring module (102, 103, 104, 105, 106, 107), and wherein a virtual simulation (117) of the process engineering plant is performed, wherein a theoretical model of the process engineering plant is operated in dependence of the result of the evaluation performed by the at least one component monitoring module (102, 103, 104, 105, 106, 107) and in dependence of the optimum energy consumption and the optimum process parameters determined by the at least one optimising module (108, 109, 110, 111).

2. The method according to claim 1, wherein the specific component is one or several of the following: a booster, a compressor, a turbine, pump, a cold box, a heat exchanger, a column, a condenser, a precooling unit, a molsieve, a pipe, a valve.

3. The method according to claim 1 or 2, wherein the theoretical model of the process engineering plant was created during a planning phase and/or a designing phase and/or a modernisation phase of the process engineering plant.

4. The method according to any one of the preceding claims, wherein the virtual simulation of the process engineering plant is performed on a distant computing unit, particularly as a virtual machine.

5. The method according to any one of the preceding claims, wherein the virtual simulation of the process engineering plant is connected with at least one virtual simulation of another process engineering plant, wherein the process engineering plant is particularly operated in dependence of the at least one virtual simulation of the other process engineering plant.

6. The method according to any one of the preceding claims, wherein the process engineering plant is an air separation unit and/or a natural gas plant and/or an ethylene plant and/or a hydrogen plant and/or an adsorption plant.

7. Computing unit which is, in particular programmatically, configured to perform a method according to any one of the preceding claims.

Fig. 1

**Fig. 2**

EP 3 825 949 A1

Fig. 3

Fig. 4

Fig. 5

Fig. 6

Fig. 7

Fig. 8

EP 3 825 949 A1

Fig. 9

Europäisches
Patentamt

European
Patent Office

Office européen
des brevets

# EUROPEAN SEARCH REPORT

Application Number

EP 20 02 0526

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 260 934 A2 (GEN ELECTRIC [US]) 27 December 2017 (2017-12-27) * paragraphs [0069], [0070], [0075], [0076], [79and84]; figures 1-4, 8, 9 * | 1-7 | INV. G06Q50/06 |
| A | US 2010/274745 A1 (SEO IN YONG [KR] ET AL) 28 October 2010 (2010-10-28) * paragraphs [0001] - [0006], [0020] - [0022], [0106], [0134]; claim 1; figures 1-4 * | 1-7 | |

TECHNICAL FIELDS
SEARCHED (IPC)

G06Q
G05B

The present search report has been drawn up for all claims

| Place of search | Date of completion of the search | Examiner |
|---|---|---|
| Munich | 19 March 2021 | Juillot, Olivier J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 02 0526

This annex lists the patent family members relating to the patent documents cited in the above-mentioned European search report.
The members are as contained in the European Patent Office EDP file on
The European Patent Office is in no way liable for these particulars which are merely given for the purpose of information.

19-03-2021

| Patent document cited in search report | | | Publication date | Patent family member(s) | | | Publication date |
|---|---|---|---|---|---|---|---|
| EP | 3260934 | A2 | 27-12-2017 | EP | 3260934 | A2 | 27-12-2017 |
| | | | | US | 2017364043 | A1 | 21-12-2017 |
| US | 2010274745 | A1 | 28-10-2010 | CN | 101872181 | A | 27-10-2010 |
| | | | | JP | 5431178 | B2 | 05-03-2014 |
| | | | | JP | 2010256328 | A | 11-11-2010 |
| | | | | KR | 20100116502 | A | 01-11-2010 |
| | | | | US | 2010274745 | A1 | 28-10-2010 |

For more details about this annex : see Official Journal of the European Patent Office, No. 12/82